# FASCICULE DE BREVET EUROPEEN

(11) **EP 1 299 930 B1**
(45) Date de publication et mention de la délivrance du brevet: **09.05.2012**
(21) Numéro de dépôt: 01984196.4
(22) Date de dépôt: 06.07.2001
(51) Int. Cl.: H01S 3/067, G02F 1/35

(54) **LASER A FIBRE DE PUISSANCE A CONVERSION DE MODE**
LEISTUNGSFASERLASER MIT MODENKONVERSION
POWER FIBRE LASER WITH MODE CONVERSION

(30) Priorité: 07.07.2000 FR 0008918
(43) Date de publication de la demande: 09.04.2003
(73) Titulaire: Thales, 75008 Paris (FR)
(72) Inventeur: HUIGNARD, Jean-Pierre Thales Intellectual Property, F-94117 Arcueil Cedex (FR); BRIGNON, Arnaud Thales Intellectual Property, F-94117 Arcueil Cedex (FR)
(74) Mandataire: Esselin, Sophie
(86) Numéro de dépôt international: PCT/FR2001/002188
(87) Numéro de publication internationale: WO 2002/005394

(56) Documents cités:
- EP-A- 0 980 122
- US-A- 5 818 630
- BRIGNON A ET AL: "Multimode to single-mode conversion of a Yb-doped fiber amplifier with a photorefractive Rh:BaTiO/sub 3/ crystal" APPLIED PHYSICS B (LASERS AND OPTICS), MAY 2001, SPRINGER-VERLAG, GERMANY, vol. B72, no. 6, pages 789-791, XP002180415 ISSN: 0946-2171
- BOURDERIONNET J ET AL: "Spatial mode control of a diode-pumped Nd:YAG laser using an intracavity holographic phase plate" CONFERENCE ON LASERS AND ELECTRO-OPTICS (CLEO 2000);SAN FRANCISCO, CA, USA MAY 7-MAY 12 2000, 2000, pages 403-404, XP002163467 Pacif Rim Conf Lasers Electro Opt CLEO Tech Dig;Pacific Rim Conference on Lasers and Electro-Optics, CLEO - Technical Digest 2000 IEEE, Piscataway, NJ, USA

## Description

L'invention est du domaine des sources lasers de puissance à fibre dopée pompée et dont le coeur est multimode. Couramment, la fibre reçoit un faisceau émis par un oscillateur monomode. Le faisceau continu ou impulsionnel issu de la fibre est donc un faisceau amplifié mais sa puissance reste limitée. L'invention est adaptée à la réalisation de sources fibres, compactes et efficaces et délivrant un faisceau de haute puissance avec une bonne qualité de faisceau. La demande de brevet EP0980122 décrit un laser à fibre pompée comprenant un laser oscillateur monomode transmettant un faisceau laser monomode à une première extrémité d'une fibre dopée dans lequel la fibre dopée est multimode et qui comprend également un dispositif de conversion spatial de mode.

Le laser conforme à l'invention est un laser à fibre pompée comprenant un laser oscillateur monomode transmettant un faisceau laser monomode à une première extrémité d'une fibre dopée, dans lequel la fibre dopée est multimode et qui comprend également un dispositif de conversion spatial de mode recevant le faisceau laser monomode et un faisceau amplifié issu de la fibre dopée multimode, ce dispositif de conversion étant constitué par un milieu non linéaire apte à l'enregistrement d'un hologramme, et qui comprend un séparateur optique placé entre le laser oscillateur et la première extrémité de la fibre dopée multimode pour transmettre une partie du faisceau, émis par le laser oscillateur, vers la fibre dopée multimode et une autre partie vers le dispositif de conversion de mode ; et dans lequel la fibre dopée multimode est couplée au dispositif de conversion de mode de façon que le faisceau amplifié issu de la fibre dopée multimode interfère dans le dispositif de conversion de mode, avec la partie du faisceau provenant du séparateur optique et qu'un transfert d'énergie se produise du faisceau amplifié issu de la fibre dopée multimode vers la partie de faisceau transmise par le séparateur et que le dispositif de conversion de mode transmette un faisceau amplifié monomode.

Les différents objets et caractéristiques de l'invention apparaîtront plus clairement dans la description qui va suivre faite à titre d'exemple et dans les figures qui représentent :
- les figures 1 a à 1 c, des exemples de réalisation simplifiés de l'invention ;
- la figure 2, un exemple de réalisation détaillé de l'invention ;
- la figure 3, une variante de réalisation du dispositif de la figure 2 aidant à la compréhension de l'invention;
- les figures 4a et 4b, un dispositif de l'invention dans lequel la fibre multimode comporte une multitude de coeurs dopés ;
- la figure 5, une variante simplifiée du dispositif de l'invention.

La réalisation de sources lasers de puissance supérieure au kW est démontrée aujourd'hui par plusieurs laboratoires à partir de barreaux Nd-YAG pompés par diodes. Deux types d'architectures conduisent à ce type de performances : oscillateur unique ou configuration « MOPA » constituée d'un oscillateur, amplificateur et éventuellement miroir à conjugaison de phase. L'objet de l'invention est de proposer une architecture de source fibre pompée par diodes du type MOPA. Des puissances continues supérieures à 100W peuvent être obtenues à partir de fibres quasi monomodes. Compte tenu de ces résultats, nous proposons de réaliser des sources de puissance supérieures à 1 kW à partir de fibres multimodes dont le volume du milieu à gain est très supérieur à celui de la fibre monomode. Afin de garantir une qualité de faisceau proche de la diffraction, on introduit un dispositif de conversion du mode constitué par un milieu non linéaire servant à l'enregistrement d'un hologramme dynamique ou éventuellement fixe (hologramme de volume).

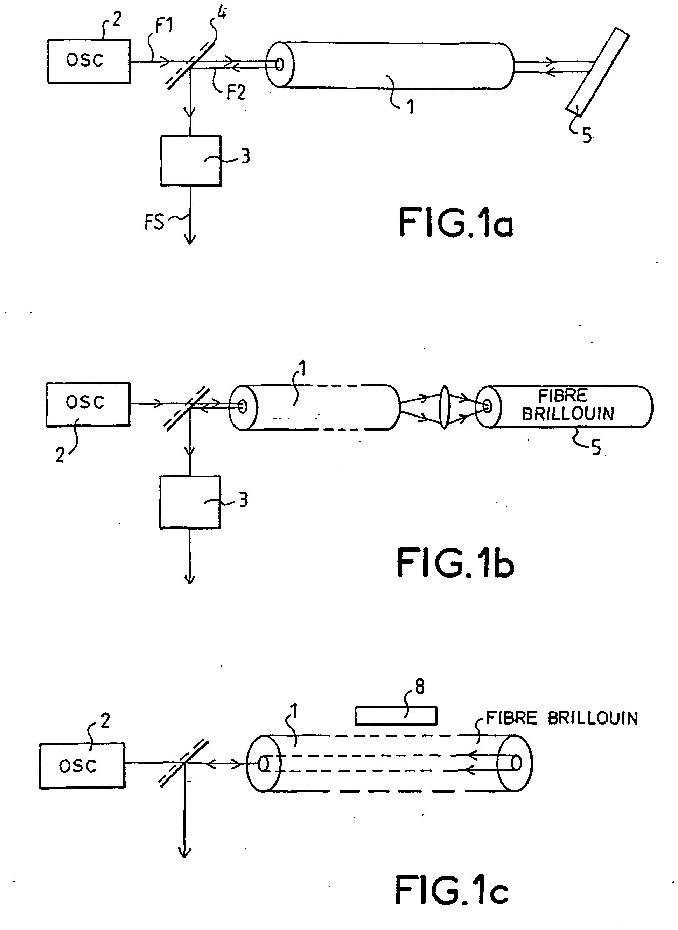

La figure 1a représente un exemple de réalisation simplifié de l'invention. Dans cet exemple de réalisation, la fibre est autopompée. Il comporte une fibre optique multimode dont le coeur est dopé de façon à présenter un milieu actif. Le diamètre de ce coeur est préférentiellement supérieur à 20 µm voire même supérieur à 50 µm. On pourra même envisager des fibres dont le diamètre du coeur est supérieur à 80 µm. La fibre optique reçoit un faisceau laser provenant d'un oscillateur 2. Ce faisceau laser est monomode. Le faisceau laser parcourt la fibre optique et est réfléchi par le miroir à conjugaison de phase 5, lequel réfléchit un faisceau réalisant l'autopompage de la fibre 1. Un faisceau laser est émis par la fibre vers le miroir semi-transparent 4 ou un séparateur de polarisation qui réfléchit l'énergie lumineuse reçue de la fibre 1 vers un dispositif de conversion de mode 3.

Ce dispositif de conversion de mode est réalisé dans un matériau non linéaire dans lequel a été enregistré un hologramme de volume et qui sera détaillé ultérieurement.

Ainsi, la fibre 1 étant multimode et par ailleurs de très gros diamètre par rapport aux fibres couramment utilisées dans ce type de lasers, le faisceau émis vers le dispositif 3 est multimode plus précisément ce faisceau est la superposition d'une multitude d'ondes planes d'amplitudes et de phases aléatoires. Dans ces conditions, à partir d'une fibre ainsi multimode, on a émis un faisceau relativement puissant et à l'aide du convertisseur de mode 3 on émet un faisceau de sortir FS présentant une qualité optique telle que le faisceau FS est monomode.

La figure 1b est une variante du dispositif de la figure 1 dans lequel le miroir à conjugaison de phase 5 a été remplacé par une fibre de type fibre Brillouin. Cette fibre Brillouin est du type tel que décrit dans le brevet français n° 2 669 441 déposé le 16 Novembre 1990.

La figure 1 c est une autre variante du dispositif de la figure 1 a, dans laquelle la fibre multimode 1 est une fibre à effet Brillouin.

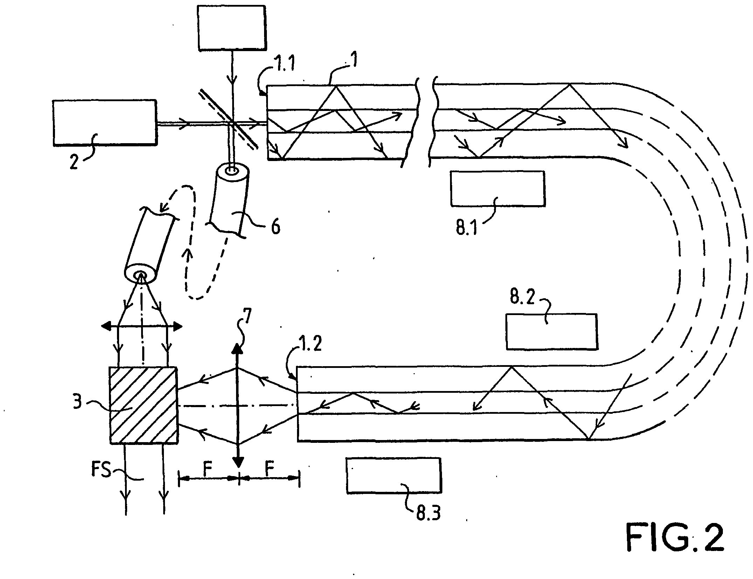

Le dispositif schématisé sur la figure 2 intègre les éléments suivants :
- un laser oscillateur monomode 2
- un amplificateur à fibre 1
- un milieu holographique 3 pour la conversion de mode

Selon la réalisation de la figure 2, une première extrémité 1.1 de la fibre 1 reçoit le faisceau monomode émis par le laser oscillateur 2. Une deuxième extrémité 1.2 de la fibre permet de transmettre ce faisceau, après amplification dans la fibre, vers le milieu holographique 3. Celui-ci reçoit par ailleurs une portion du faisceau monomode fourni par le laser oscillateur 2. Les deux faisceaux interfèrent dans le milieu holographique et comme cela sera expliqué ci-après, il se produit un transfert de l'énergie du faisceau amplifié issu de la fibre vers le faisceau monomode fourni par le laser oscillateur 2.

L'oscillateur 2 est constitué d'une source de faible puissance (> 1W) monomode : la source est monofréquence, avec une certaine longueur de cohérence, et présente une qualité spatiale de l'onde limitée par diffraction. A titre d'exemple, c'est un laser fibre, ou un oscillateur classique pompé diodes.

L'amplificateur multimode est donc une fibre 1 dont le pompage est assuré par des diodes de puissance 8.1, 8.2, ... 8.3, en configuration longitudinale ou transverse. Le diamètre du coeur de la fibre est par exemple 100 µm. Selon la technique classique, le pompage du coeur de fibre qui constitue le milieu à gain, s'effectue par réflexion totale de la pompe sur l'interface gaine à l'intérieur de la fibre.

Le dispositif de conversion de mode 3 est constitué par un milieu non linéaire à variation d'indice. Interfèrent dans le volume de ce milieu : le faisceau de faible puissance F1 issu de l'oscillateur et le faisceau multimode F2 issu de l'amplificateur à fibre. Les deux faisceaux F1 et F2 sont transmis au dispositif de conversion de mode 3 par une fibre monomode 6. Il est connu que le type d'interaction à deux ondes dans le dispositif de conversion permet de transférer toute l'énergie du faisceau intense multimode F2 vers le faisceau monomode F1 dans la mesure où le coefficient de gain à deux ondes du matériau est suffisant. Cette interaction avec la fonction de « nettoyage » du faisceau (beam « clean up ») a été validée avec les mécanismes non linéaires suivants : cristaux photoréfractifs LiNbO₃, BaTiO₃, SBN... ; non linéarités thermiques : colorants, cristaux liquides... ; effet Brillouin dans les fibres multimodes.

Le dispositif de la figure 2 permet d'obtenir une déplétion complète du faisceau intense F2 au bénéfice d'une amplification du faisceau monomode F1. Dans la mesure où l'hologramme est dynamique, le matériau s'adapte aux évolutions lentes de la figure d'interférences entre le faisceau fourni par la fibre 1 et le faisceau fourni par le laser oscillateur 2.

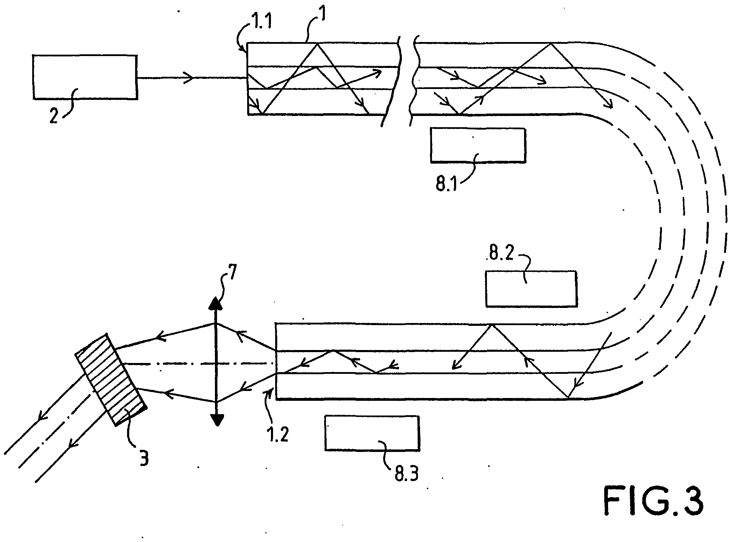

Le dispositif de conversion de mode peut également être réalisé par un composant holographique fixe : par exemple, cristal photoréfractif suivi d'une procédure de fixation du réseau photoinduit ou par un hologramme enregistré dans le volume d'un matériau photopolymère. Dans ce cas, le composant étant fixe, il ne s'adapte plus à une évolution de la figure d'interférence. La conversion de mode n'est efficace que si la phase relative entre les différents modes rayonnés par la fibre reste fixe. Cette configuration ne nécessite pas d'onde de référence pour la lecture. Le système se présente donc comme cela est représenté en figure 3. L'extrémité 1.2 de la fibre 1 est couplée par la lentille 7 au dispositif de conversion du mode 3. L'ensemble extrémité de fibre 1.2 - lentille de Fourier et composant holographique de conversion de mode constitue alors une structure compacte.

A titre d'exemple, une source de puissance continue supérieure au 1 kW émettant à • = 1,053 µm peut être réalisée dans les conditions suivantes :
- oscillateur - fibre Yb -1 W
- amplificateur - gain 30 dB
- conversion du mode par cristal BaTiO₃ dopé Rh ou LiNbO₃ sensibilisé à λ = 1,053 µm
- puissance de pompage : 2 à 2,5 kW

Le faisceau référence fourni par le laser oscillateur 2 est transmis par une fibre monomode 6 dont la longueur est égale à celle de la fibre amplificatrice 1. Cette condition relâche la contrainte sur la longueur de cohérence de l'oscillateur.

Le dispositif de l'invention permet d'extraire une puissance élevée d'un amplificateur fibre multimode. Dans ces conditions, on réduit l'ensemble des effets non linéaires annexes (Brillouin, Raman...) puisque la densité de puissance émise reste inférieure au seuil de dommage de l'interface.

Un dispositif de conversion du mode assure le transfert cohérent de l'énergie émise dans un mode spatial dont la qualité est limitée par diffraction.

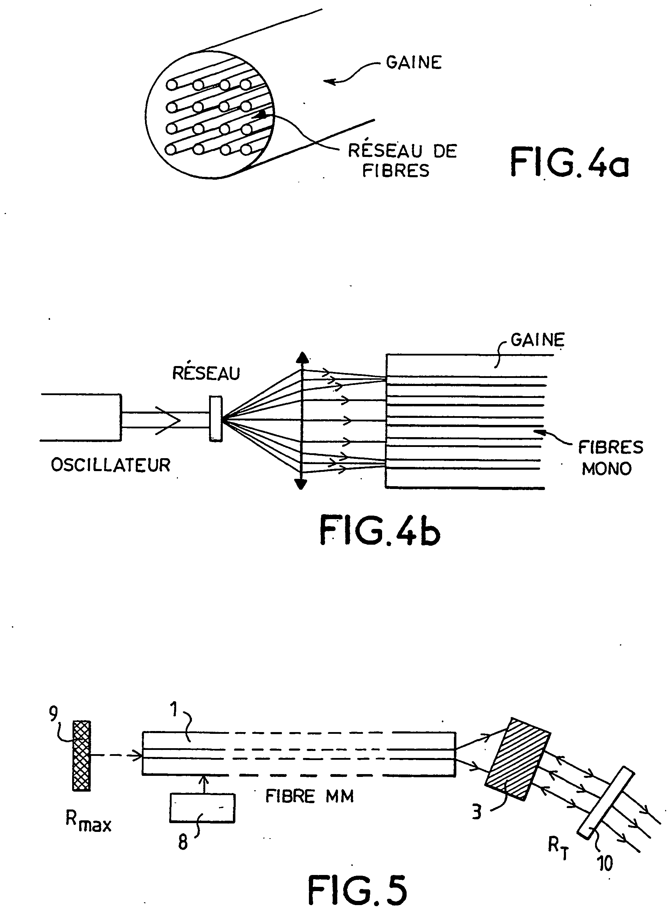

Le dispositif proposé réalise également la conversion de mode si la fibre amplificatrice est constituée d'un ensemble ordonné ou désordonné de coeurs de fibres monomodes comme représenté sur la figure 4a.

L'injection de l'oscillateur dans un réseau ordonné de coeurs de fibres monomodes est obtenue par un réseau à ondes multiples.

Comme cela est représenté en figure 5, l'ensemble fibre multimode + dispositif de conversion spatiale du mode peut constituer un oscillateur émettant un faisceau monomode. Dans ce cas la fibre 1 pompé par une ou plusieurs diodes 8 et le convertisseur de mode sont placés dans une cavité optique 9, 10.

Il est à noter que la fibre peut être à maintien de polarisation. Sinon, le convertisseur de mode doit pouvoir traiter les deux composantes de polarisation.

Enfin, le laser peut fonctionner en mode continu ou impulsionnel.

## Revendications

1. Laser à fibre pompée comprenant un laser oscillateur monomode (2) transmettant un faisceau laser mopomode à une première extrémité (1.1) d'une fibre dopée (1), dans lequel la fibre dopée est multimode (1) et qui comprend également un dispositif de conversion spatial de mode (3) recevant le faisceau laser monomode et un faisceau amplifié issu de la fibre dopée multimode, ce dispositif de conversion étant constitué par un milieu non linéaire apte à l'enregistrement d'un hologramme, et qui comprend un séparateur optique (4) placé entre le laser oscillateur (2) et la première extrémité (1.1) de la fibre dopée multimode (1) pour transmettre une partie du faisceau, émis par le laser oscillateur, vers la fibre dopée multimode et une autre partie vers le dispositif de conversion de mode ; et dans lequel la fibre dopée multimode est couplée au dispositif de conversion de mode de façon que le faisceau amplifié issu de la fibre dopée multimode interfère dans le dispositif de conversion de mode avec la partie du faisceau provenant du séparateur optique (4) et qu'un transfert d'énergie se produise du faisceau amplifié issu de la fibre dopée multimode vers la partie de faisceau transmise par le séparateur et que le dispositif de conversion de mode transmette un faisceau amplifié monomode.

2. Laser selon la revendication 1, dans lequel le diamètre du coeur de la fibre multimode (1) est très supérieur à 30 micromètres.

3. Laser selon la revendication 1 ou 2, qui comporte un dispositif de réflexion à conjugaison de phase (5) couplé à une deuxième extrémité (1.2) de la fibre dopée multimode (1) de façon à réfléchir un faisceau laser transmis par cette fibre vers cette même fibre, ledit faisceau réfléchi tenant lieu de faisceau de pompe.

4. Laser selon l'une des revendications précédentes, qui comporte une ou plusieurs sources lumineuses de pompage transmettant un ou plusieurs faisceaux de pompe à la fibre dopée multimode.

5. Laser selon la revendication 4, dans lequel une deuxième extrémité (1.2) de la fibre dopée multimode (1) est couplée au dispositif de conversion de mode (3) et en ce que ce dispositif de conversion de mode est préenregistré de façon que le faisceau transmis par la deuxième extrémité (1.2) de la fibre dopée multimode soit converti en faisceau monomode.

6. Laser selon l'une des revendications précédentes, dans lequel ladite fibre dopée multimode comporte plusieurs coeurs dopés.

## Claims

1. A pumped fibre laser comprising a monomode oscillator laser (2) transmitting a monomode laser beam to a first end (1.1) of a doped fibre (1), wherein the doped fibre is multimode (1), and which further comprises a spatial mode conversion device (3) that receives the monomode laser beam and an amplified beam coming from the multimode doped fibre, said conversion device being constituted by a non-linear medium that is designed to write a hologram, and which comprises an optical separator (4) disposed between the oscillator laser (2) and the first end (1.1) of the multimode doped fibre (1) to transmit one part of the beam that is emitted by the oscillator laser towards the multimode doped fibre and another part towards the mode conversion device; and wherein the multimode doped fibre is coupled to the mode conversion device so that the amplified beam coming from the multimode doped fibre interferes in the mode conversion device with the part of the beam that originates from the optical separator (4) and energy is transferred from the amplified beam coming from the multimode doped fibre towards the part of the beam that is transmitted by the separator and that the mode conversion device transmits a monomode amplified beam.

2. The laser according to claim 1, wherein the diameter of the core of the multimode fibre (1) is much more than 30 micrometres.

3. The laser according to claim 1 or 2, which comprises a phase conjugation reflection device (5) that is coupled to a second end (1.2) of the multimode doped fibre (1) so as to reflect a laser beam that is transmitted by said fibre towards this same fibre, said reflected beam replacing the pumping beam.

4. The laser according to any one of the preceding claims, which comprises one or more pumping light sources transmitting one or more pumping beams to the multimode doped fibre.

5. The laser according to claim 4, wherein a second end (1.2) of the multimode doped fibre (1) is coupled to the mode conversion device (3) and wherein said mode conversion device is pre-written so that the beam transmitted by the second end (1.2) of the multimode fibre is converted into a monomode fibre.

6. The laser according to any one of the preceding claims, wherein said multimode doped fibre comprises a plurality of doped cores.

## Patentansprüche

1. Gepumpter Faserlaser mit einem Monomoden-Oszillatorlaser (2), der einen Monomoden-Laserstrahl zu einem ersten Ende (1.1) einer dotierten Faser (1) sendet, wobei die dotierte Faser multimodal (1) ist, und der auch eine räumliche Modenkonversionsvorrichtung (3) aufweist, die den Monomoden-Laserstrahl und einen von der dotierten Multimodenfaser kommenden verstärkten Strahl empfängt, wobei diese Konversionsvorrichtung durch ein nichtlineares Medium gebildet wird, das ein Hologramm schreiben kann, und der einen Lichtseparator (4) umfasst, der zwischen dem Oszillatorlaser (2) und dem ersten Ende (1.1) der dotierten Multimodenfaser (1) angeordnet ist, um einen Teil des von dem Oszillatorlaser emittierten Strahls zu der dotierten Multimodenfaser und einen anderen Teil zur Modenkonversionsvorrichtung sendet; und wobei die dotierte Multimodenfaser mit der Modenkonversionsvorrichtung gekoppelt ist, so dass der von der dotierten Multimodenfaser kommende verstärkte Strahl in der Modenkonversionsvorrichtung mit dem von dem Lichtseparator (4) stammenden Teil des Strahls interferiert und Energie von dem von der dotierten Multimodenfaser kommenden verstärkten Strahl zu dem vom Separator gesendeten Teil des Strahls übertragen wird und die Modenkonversionsvorrichtung einen verstärkten Monomodusstrahl sendet.

2. Laser nach Anspruch 1, wobei der Durchmesser des Kerns der Multimodenfaser (1) viel größer als 30 Mikrometer ist.

3. Laser nach Anspruch 1 oder 2, der eine Phasenkonjugationsreflexionsvorrichtung (5) umfasst, die mit einem zweiten Ende (1.2) der dotierten Multimodenfaser (1) gekoppelt ist, um einen Laserstrahl zu reflektieren, der von dieser Faser zur selben Faser ausgesendet wird, wobei dieser reflektierte Strahl den Pumpstrahl ersetzt.

4. Laser nach einem der vorherigen Ansprüche, der eine oder mehrere Pumplichtquellen umfasst, die einen oder mehrere Pumpstrahlen zu der dotierten Multimodenfaser sendet.

5. Laser nach Anspruch 4, wobei ein zweites Ende (1.2) der dotierten Multimodenfaser (1) mit der Modenkonversionsvorrichtung (3) gekoppelt ist und wobei die Modenkonversionsvorrichtung vorbeschrieben ist, so dass der vom zweiten Ende (1.2) der Multimodenfaser gesendete Strahl in eine Monomodenfaser konvertiert wird.

6. Laser nach einem der vorherigen Ansprüche, wobei die dotierte Multimodenfaser mehrere dotierte Kerne umfasst.
